# EUROPÄISCHE PATENTANMELDUNG

(11) **EP 0 736 455 A2**
(43) Veröffentlichungstag der Anmeldung: **09.10.1996**
(21) Anmeldenummer: 96105139.8
(22) Anmeldetag: 30.03.1996
(51) Int. Cl.: B65B 43/50

(54) **Vorrichtung und Verfahren zum Befüllen von Behältern**

(30) Priorität: 07.04.1995 DE 19513103
(71) Anmelder: Optima-Maschinenfabrik Dr. Bühler GmbH & Co., 74523 Schwäbisch Hall (DE)
(72) Erfinder: Burkart, Ulrich, 74523 Schwäbish Hall (DE)
(74) Vertreter: Patentanwälte Ruff, Beier, Schöndorf und Mütschele

(57) **Zusammenfassung**

Eine Vorrichtung zum Befüllen von Behältern enthält eine von einem Servoantrieb antreibbare Übergabeeinrichtung, die die Behälter taktweise zunächst zu einer Befüllstation und anschließend zu einer Waage bewegt. Durch Rückwärtsdrehen und ggf. anschließendes Vorwärtsdrehen des Servoantriebs um einen kleinen Winkel von beispielsweise einem Grad wird es möglich, die Übergabeeinrichtung außer Eingriff mit den Behältern zu bringen, so daß diese auf der Waage gewogen werden können, ohne daß durch Reibung zwischen der Übergabeeinrichtung und den Behältern das Meßergebnis verfälscht wird.

Durch mehrfaches Hin- und Herdrehen des Servoantriebs um kleine Winkel kann ein Rütteln der Behälter erreicht werden, so daß sich in dem zu befüllenden Gut bildende Brücken o.dgl. beseitigt werden können.

## Beschreibung

Die Erfindung geht aus von einer Befüllvorrichtung für Behälter, mit deren Hilfe einzelne Behälter, die leer angefördert werden, befüllt und ggf. gewogen werden.

Bei bekannten Vorrichtungen dieser Art ist eine Übergabeeinrichtung vorhanden, die mechanisch angetrieben wird. Hierzu können Getriebemotoren o.dgl. verwendet werden. Die Übergabeeinrichtung arbeitet taktweise, da der zu befüllende Behälter in der Befüllstation stehen bleiben muß. Bei einer rein mechanischen Lösung ist dieser Taktabstand, d.h. die Strecke, um die die Übergabeeinrichtung einen Behälter während eines Takts befördert, fest. Eine Änderung ist nur mit großem Aufwand möglich.

Der Erfindung liegt die Aufgabe zugrunde, eine Vorrichtung zum Befüllen von Behältern zu schaffen, die eine größere Flexibilität beim Betrieb ermöglicht.

Zur Lösung dieser Aufgabe schlägt die Erfindung eine Vorrichtung mit den Merkmalen des Anspruchs 1 vor.

Die Erfindung schlägt ebenfalls ein Verfahren mit den Merkmalen des Anspruchs 7 und den Merkmalen des Anspruchs 9 vor. Weiterbildungen der Erfindung sind Gegenstand der jeweiligen abhängigen Ansprüche.

Durch die Verwendung eines Servoantriebs für die Übergabeeinrichtung kann die Vorrichtung nach der Erfindung wesentlich leichter an unterschiedliche Gegebenheiten angepaßt werden. Es ist durch Änderung des Steuerungsablaufes mit geringem Aufwand möglich, den Taktabstand und weitere Parameter der Vorrichtung zu ändern. Dadurch kann die Vorrichtung an unterschiedliche Gegebenheiten angepaßt werden.

Erfindungsgemäß kann die Vorrichtung eine Waage aufweisen, die zwischen der Befüllstation und der Abgabestation angeordnet ist. Die Übergabeeinrichtung ist in diesem Fall so ausgebildet, daß sie den Behälter zu der Waage bewegt und ihn dort stehen läßt, damit er unbeeinflußt von der Übergabeeinrichtung gewogen werden kann.

Erfindungsgemäß kann die Steuerung für den Servomotor derart ausgebildet sein, daß dieser um einen kleinen Winkel rückwärts gedreht werden kann. Hierbei kann es sich um einen Winkel im Bereich von beispielsweise 1 bis 2° handeln. Diese Rückwärtsdrehung des Servomotors führt zu einer Rückwärtsbewegung der Übergabeeinrichtung um eine kurze Strecke, die gerade ausreicht, die Übergabeeinrichtung außer Eingriff mit dem Behälter zu bringen. Der Behälter steht daher in diesem Fall unbeeinflußt von der Übergabeeinrichtung auf der Waage, so daß sein Gewicht bzw. das Gewicht seines Inhalts exakt ermittelt werden kann. Diese Rückwärtsdrehung des Servomotors ist, wenn die Übergabeeinrichtung mehrere Aufnahmepositionen aufweist, auch bei der Befülleinrichtung wirksam. Es ist daher möglich, den Behälterinhalt auch direkt an der Befüllstation zu wiegen, da auch hier die Übergabeeinrichtung außer Eingriff mit dem Behälter gebracht wird. Es ist ebenfalls möglich, daß zur Freistellung des Behälters zunächst ein Rückwärtsbewegen und daran anschließend ein Vorwärtsbewegen der Übergabeeinrichtung um einen kleineren Winkel erfolgt.

Erfindungsgemäß kann in Weiterbildung die Steuerung für den Servomotor derart ausgebildet sein, daß dieser eine Folge von abwechselnden Rückwärts-Vorwärtsdrehungen mit kleinem Drehwinkel ausführen kann. Es kann sich auch hier um einen sehr kleinen Winkel im Bereich von einem Grad handeln, was dann dazu führt, daß an dem Behälter gerüttelt wird. Die Zahl der Drehungen kann dabei so eingestellt werden, daß das gewünschte Ergebnis immer erreicht wird. Es ist auch denkbar, die Rüttelbewegung so auszuführen, daß eine Vorwärtsdrehung um einen etwas größeren Winkel durchgeführt wird als die jeweils anschließende Rückwärtsdrehung.

Das von der Erfindung vorgeschlagene Verfahren enthält als wichtiges Merkmal, daß der Antrieb dann etwas zurückgedreht wird, wenn der Behälter auf der Waage steht. Das Wiegen geschieht also ohne jede Beeinflussung durch die Übergabeeinrichtung.

Durch das von der Erfindung vorgeschlagene mehrfache Hin- und Herdrehen des Servomotors wird ein Rütteln des Behälters erreicht, so daß das in ihm abgefüllte Gut sich auflockern und absenken kann, wobei Brückenbildungen o.dgl. beseitigt werden.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: schematisch eine Aufsicht auf eine Vorrichtung nach der Erfindung;
- Fig. 2: in vergrößertem Maßstab eine Teilansicht der Anordnung der Fig. 1.

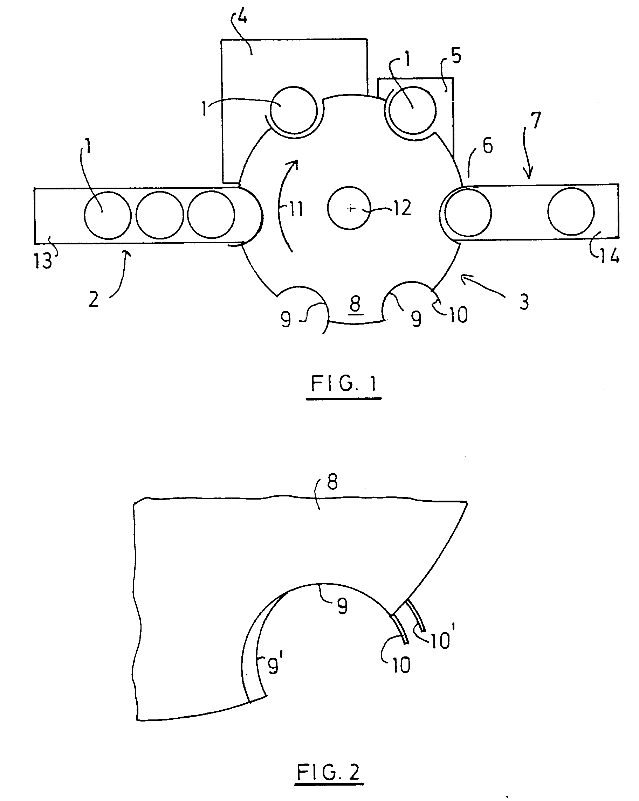

Die in Fig. 1 stark vereinfachte Vorrichtung zum Befüllen von Behältern 1 enthält eine Zuführeinrichtung 2, die eine Reihe von Behältern 1 herbeibringt. Mit Hilfe einer Übergabeeinrichtung 3 werden die Behälter 1 in einer vorbestimmten Richtung zu einer Befüllstation 4 bewegt. Die Befüllstation 4 enthält eine Befüllposition, die längs des Bewegungsweges der Behälter 1 angeordnet ist und von der Zuführeinrichtung 2 einen bestimmten Taktabstand aufweist. Im dargestellten Beispiel entspricht der Taktabstand der Bogenlänge des kreisförmig verlaufenden Bewegungsweges.

In Bewegungsrichtung hinter der Befüllstation 4 ist eine Waage 5 angeordnet, wobei der Taktabstand zwischen der Waage 5 und der Befüllstation 4 gleich dem Taktabstand zwischen der Befüllstation 4 und der Zuführeinrichtung 2 ist.

Um den gleichen Taktabstand versetzt ist an die Waage 5 anschließend eine Abgabestation 6 angeordnet, von der aus die Behälter 1 mit Hilfe einer Wegführeinrichtung 7 abtransportiert werden.

Die Übergabeeinrichtung 3 ist so ausgebildet, daß sie taktweise arbeitet. Sie bleibt also jeweils in der in Fig. 1 dargestellten Stellung stehen. In dieser Stellung ist jeweils ein zu befüllender Behälter 1 in der Befüllposition der Befüllstation 4 und ein gefüllter Behälter in der Waageposition der Waage 5 angeordnet.

Die Übergabeeinrichtung enthält im dargestellten Beispiel einen Taktstern 8, also ein umlaufendes Rad mit mehreren Aufnahmepositionen 9, deren Umfangsabstand dem Taktabstand gleich ist. An den Aufnahmepositionen 9 ist einseitig ein Greifer 10 angeordnet, bei dem es sich beispielsweise um eine Art Geländer handelt, das seitlich an den Behältern 1 angreift und diese in Richtung des Pfeils 11 vor sich herschiebt.

Angetrieben wird die Übergabeeinrichtung 3, d.h. im dargestellten Beispiel der Taktstern 8 mit den Aufnahmepositionen 9 und den Greifern 10 von einem Servomotor 12, dessen Achse in Fig. 1 mittig dargestellt ist. Dieser Servomotor wird von einer Steuerung angesteuert und ist so ausgebildet, daß er sich um beliebige Winkel in beide Richtungen bewegen kann.

Fig. 2 zeigt in vergrößertem Maßstab einen Ausschnitt aus einem Taktstern 8 im Bereich einer Aufnahmeposition 9, wobei die Fig. 2 den Taktstern 8 in zwei Positionen darstellt. Der Greifer 10 stellt eine Fortsetzung der Kreisbogenform des Randes der Aufnahmeposition 9 dar.

Die in Fig. 1 und 2 dargestellte Vorrichtung wird folgendermaßen betrieben. In der in Fig. 1 dargestellten Ausgangsposition ist eine Aufnahmeposition 9 in Ausrichtung mit den Behältern 1 der Zuführeinrichtung 2 angeordnet. Die Zuführeinrichtung 2 kann beispielsweise ein Förderband 13 enthalten, das die einzelnen Behälter 1 in dichter Folge in Richtung auf die Übergabeeinrichtung 3 befördert. Der in Förderrichtung führende Behälter 1 gelangt dabei in die Aufnahme 9 des Taktsterns 8. Anschließend wird der Servoantrieb so angesteuert, daß der Servomotor 12 den Taktstern 8 um 60° in Richtung des Pfeiles verdreht. In dieser Position bleibt der Servomotor 12 und mit ihm der Taktstern 8 stehen. Ein Behälter 1 steht nun in der Befüllposition der Befüllstation 4 und ein zweiter Behälter 1 steht auf der Waage 5. Jetzt wird der Servomotor 12 um einen Winkel von beispielsweise 2° rückwärts gedreht, also in Gegenrichtung zum Pfeil 11. Gegebenenfalls kann anschließend auch eine kurze Vorwärtsdrehung von beispielsweise 1° erfolgen. Der in der Befüllstation 4 angeordnete Behälter 1 und der auf der Waage 5 stehende Behälter 1 bleiben dabei stehen, so daß durch die Rückwartsdrehung der Greifer 10 und der in Umfangsrichtung hintere Rand der Aufnahmeposition 9 außer Berührung und damit außer Eingriff mit der Außenseite des Behälters 1 gelangen.

Da der Rand der Aufnahmepositionen 9 kreisförmig mit einem Durchmesser ist, der größer ist als der kreisförmige Durchmesser der Behälter 1, liegt bei der Vorwärtsbewegung der Behälter 1 nur im Bereich seiner in Bewegungsrichtung rückwärtigen Seite an den Aufnahmepositionen 9 an. Durch die Rückwartsdrehung gelangt der Behälter 1 also allseits außer Eingriff mit dem Taktstern 8. In dieser Position bleibt der Servomotor 12 stehen. Ein Behälter 1 kann befüllt und ein zweiter gewogen werden. Es wäre denkbar, den Wiegevorgang direkt in der Befüllstation durchzuführen, da auch der dortige Behälter außer Eingriff mit der Übergabeeinrichtung 3 ist.

Nach dem Befüllen des einen und dem Wiegen des anderen Behälters wird der Servomotor 12 wiederum in Vorwärtsrichtung um 60° verdreht, so daß der zuletzt gewogene Behälter 1 in die Abgabeposition 6 und der zuletzt befüllte Behälter 1 auf die Waage 5 gelangt. Wiederum wird daraufhin der Servomotor 12 um einen kurzen Betrag rückwärts gedreht, um die Übergabeeinrichtung 3 außer Eingriff mit den Behältern zu bringen. Der in der Abgabeposition 6 befindliche Behälter kann dann durch Antrieb der Wegführeinrichtung 7, die ebenfalls ein Förderband 14 enthalten kann, abtransportiert werden.

Fig. 2 zeigt eine Aufnahme 9 mit zugehörigem Greifer 10 in einer bestimmten Position und gleichzeitig die Aufnahme in einer um einen kleinen Winkel zurückverdrehten Position, gekennzeichnet durch die Striche hinter den Bezugszeichen.

Die Steuerung des Servomotors 12 kann erfindungsgemäß so ausgebildet werden, daß diese Rückwärts- und anschließende Vorwärtsdrehung mehrfach wiederholt werden kann, was zu einem Rütteln des Behälters bzw. seines Inhalts führt. Dadurch kann frei fließendes Gut in dem Behälter durchgerüttelt werden, wodurch Brückenbildungen beseitigt werden und das Gut sich in dem Behälter absetzt. Der Rüttelvorgang kann an einer Vorrichtung durchgeführt werden, die keine Waage aufweist, er kann aber auch an einer Befüllvorrichtung mit Waage durchgeführt werden. So ist es beispielsweise möglich, das Rütteln vor dem Wiegen durchzuführen, also zunächst ein mehrfaches Hin- und Herdrehen des Servomotors mit einem daran anschließenden Freistellen durch eine Rückwärtsdrehung.

Zum Rütteln ist es ebenfalls möglich, beispielsweise um einen Winkel von einem Grad rückwärts zu drehen, und anschließend eine Vorwärtsdrehung um 1,5°, und dies mehrfach wiederholt.

Die Verwendung einer Übergabeeinrichtung mit Hilfe eines Servoantriebs ermöglicht frei einstellbare und schnell zu ändernde Teilungsschritte und macht es möglich, das mechanische aufwendige Taktgetriebe einzusparen.

In dem dargestellten Ausführungsbeispiel weist die Übergabeeinrichtung 3 einen Taktstern auf, der die einzelnen Behälter längs kreisbogenförmigen Abschnitten taktweise bewegt.

Es ist aber ebenfalls möglich, anstelle eines kreisrunden Taktsterns einen ovalen Taktstern zu verwenden, bei dem dann der Bewegungsweg keinen Kreisbogen, sondern einen anderen Bogen bildet.

## Patentansprüche

1. Vorrichtung zum Befüllen von Behältern (1), mit
1.1 einer Zuführeinrichtung (2), die
1.1.1 eine Reihe zu befüllender Behälter (1) nacheinander anliefert,
1.2 einer Befüllstation (4), in der
1.2.1 ein einzelner Behälter (1) befüllt wird,
1.3 eine Abgabestation (6), von der aus
1.3.1 die gefüllten Behälter (1) entnommen werden können,
1.4 einer taktweise arbeitenden Übergabeeinrichtung (3), die
1.4.1 einzelne Behälter (1) von der Zuführeinrichtung (2) übernimmt,
1.4.2 zur Befüllstation (4) bewegt,
1.4.3 dort während des Befüllens stehen läßt und
1.4.4 nach dem Befüllen zu der Abgabestation (6) bewegt, sowie mit
1.5 einem Antrieb für die Übergabeeinrichtung (3), der
1.5.1 einen Servomotor (12) mit einer Ansteuerung für diesen aufweist.

2. Vorrichtung nach Anspruch 1, mit einer Waage (5), die zwischen der Befüllstation (4) und der Abgabestation (6) angeordnet ist, wobei die Übergabeeinrichtung (3) derart ausgebildet ist, daß sie den Behälter (1) von der Befüllstation (4) zu der Waage (5) bewegt.

3. Vorrichtung nach Anspruch 2, bei der der Taktabstand zwischen der Zuführeinrichtung (2) und der Befüllstation (4) gleich dem Taktabstand zwischen der Befüllstation (4) und der Waage (5) ist.

4. Vorrichtung nach einem der vorhergehenden Ansprüche, bei der die Steuerung für den Servomotor (12) derart ausgebildet ist, daß dieser um einen kleinen Winkel rückwärts gedreht werden kann.

5. Vorrichtung nach einem der vorhergehenden Ansprüche, bei der die Übergabeeinrichtung (3) durch Rückwärtsdrehen des Antriebs außer Eingriff mit den Behältern (1) gebracht werden kann.

6. Vorrichtung nach einem der vorhergehenden Ansprüche, bei der die Steuerung für den Servomotor (12) derart ausgebildet ist, daß dieser eine Folge von abwechselnden Rückwärts-/Vorwärtsdrehungen mit kleinem Drehwinkel ausführen kann.

7. Verfahren zum Befüllen von Behältern, bei dem
7.1 ein zu befüllender Behälter (1) von einer Übergabeeinrichtung (3) zu einer Befüllstation (4) bewegt,
7.2 dort angehalten und
7.3 befüllt wird,
7.4 der Behälter (1) zu einer Waage (5) bewegt und
7.5 dort außer Eingriff mit der Übergabeeinrichtung (3) gebracht und
7.6 gewogen wird, wonach er
7.7 zu einer Abgabeposition bewegt wird.

8. Verfahren zum Befüllen von Behältern nach Anspruch 7, bei dem der Behälter (1) durch Rückwärtsdrehen eines Antriebs der Übergabeeinrichtung (3) außer Eingriff mit dieser gebracht wird.

9. Verfahren zum Befüllen von Behältern (1), bei dem
9.1 ein zu befüllender Behälter (1) von einer Übergabeeinrichtung (3) zu einer Befüllstation (4) bewegt,
9.2 dort angehalten und
9.3 befüllt wird,
9.4 der Behälter nach dem Befüllen durch kurzhubiges Hin- und Herbewegen der Übergabeeinrichtung (3) gerüttelt und
9.5 anschließend zu einer Abgabeposition (6) bewegt wird.

10. Verfahren zum Befüllen von Behältern nach einem der Ansprüche 7 bis 9, bei dem zum Antrieb der Übergabeeinrichtung (3) ein Servomotor (12) verwendet wird.

11. Verfahren zum Befüllen von Behältern nach Anspruch 9 oder 10, bei dem das Rütteln der Behälter (1) durch ein kurzhubiges Vorwärts-/Rückwärtsdrehen des Servomotors (12) bewirkt wird.
